# EUROPEAN PATENT APPLICATION

(11) **EP 4 822 687 A1**
(43) Date of publication of application: **14.10.2026**
(21) Application number: 26170154.4
(22) Date of filing: 01.04.2026
(51) Int. Cl.: G10L 13/033, G10L 13/08, G10L 25/30, G06F 40/20, G06F 40/30

(54) **METHOD FOR COMPOSING A FILE FOR REPRODUCTION IN TEXT-TO-SPEECH MODE**

(30) Priority: 08.04.2025 IT 202500007557
(71) Applicant: Audioboost Srl, 73024 Maglie (LE) (IT)
(72) Inventor: BALLERINI, Enrico, 73024 Maglie (LE) (IT)
(74) Representative: Metroconsult Srl

(57) **Abstract**

Method for composing a file to be reproduced in text-to-speech mode, comprising performing, by means of a trained neural network (NN), the following operations: receiving as input a text file (TXT); identifying first portions (10) of indirect speech within said text file (TXT); identifying second portions (20) of direct speech within said text file (TXT); for at least one of said second portions (20), determining, based on the content of said second portion (20) and/or based on the context of said second portion (20) in the text file (TXT), characteristics of the subject who pronounces said second portion (20) and/or how said second portion (20) is to be pronounced; generating one or more markers (M), associated with said second portion (20), wherein said one or more markers (M) define the characteristics of the subject who pronounces said second portion (20) and/or how said second portion (20) is to be pronounced; composing an output file (OUT), formed by said text file (TXT) and said markers (M).

## Description

The present invention relates to a method and a device for composing a file for reproduction in text-to-speech mode.

The present invention also relates to a process and a system for reproducing a text file in text-to-speech mode.

As is known, technologies are available that allow text files to be read; such technologies, known by the name of text-to-speech, are configured to receive a text file as input and to provide an audio file as output, or a real-time reproduction, in which said text is read by a preset voice. The voice can be synthesized (i.e., artificial), or it can be a real voice, the characteristics of which have been identified and archived, so that it can then be used for any text.

It is currently possible to manually select a voice with which to perform a text-to-speech operation; various applications make this option available, which is useful both for simple reasons of acoustic pleasantness and for more substantial issues related, for example, to the language in which the document to be read is written.

In this context, the Applicant has felt the need to prepare a technology capable of providing greater flexibility to text-to-speech reading tools, while obtaining particularly pleasing results from an acoustic point of view.

### Summary of the invention

In accordance with a first aspect, the invention has for its object a method for composing a file for reproduction in text-to-speech mode.

Preferably, said method comprises receiving a text file as input.

Preferably, said text file is received as input by a trained neural network.

Preferably, said method comprises identifying first portions of indirect speech within said text file.

Preferably, said first portions of indirect speech are identified within said text file by said trained neural network.

Preferably, said method comprises identifying second portions of direct speech within said text file.

Preferably, said second portions of direct speech are identified within said text file by said trained neural network.

Preferably, said method comprises, for at least one of said second portions, determining characteristics of the subject who pronounces said second portion.

Preferably, said method comprises, for at least one of said second portions, determining how said second portion is to be pronounced.

Preferably, characteristics of the subject who pronounces said second portion and/or how said second portion is to be pronounced are determined based on the content of said second portion.

Preferably, characteristics of the subject who pronounces said second portion and/or how said second portion is to be pronounced are determined based on the context of said second portion in the text file.

Preferably, said method comprises generating one or more markers.

Preferably, said one or more markers are generated by said trained neural network.

Preferably, said one or more markers are associated with said second portion. Preferably, said one or more markers define the characteristics of the subject who pronounces said second portion.

Preferably, said one or more markers define how said second portion is to be pronounced.

Preferably, said method comprises composing an output file.

Preferably, said output file is composed by said trained neural network.

Preferably, said output file is formed by said text file and said markers.

In accordance with a second aspect, the invention has for its object a device for composing a file to be reproduced in text-to-speech mode.

Preferably, said device comprises at least one processor.

Preferably, said processor is equipped with a trained neural network.

Preferably, said processor is configured to perform the operations of the method according to the aforementioned first aspect.

In accordance with a third aspect, the invention has for its object a process for reproducing a text file in text-to-speech mode.

Preferably, said process comprises receiving an output file.

Preferably, said output file is generated through the method in accordance with the aforementioned first aspect.

Preferably, said output file comprises one or more first portions of text.

Preferably, said one or more first portions of text are formed by indirect speech.

Preferably, said output file comprises one or more second portions of text.

Preferably, said one or more second portions of text are formed by direct speech.

Preferably, said output file comprises one or more markers.

Preferably, said one or more markers define the characteristics of the subject who pronounces the said one or more second portions.

Preferably, said one or more markers define how the said one or more second portions 20 are to be pronounced.

Preferably, said process comprises selecting one or more voices to be associated with the second portions.

Preferably, said one or more voices are selected based on said markers.

Preferably, said process comprises synthesizing one or more voices to be associated with the second portions.

Preferably, said one or more voices are synthesized based on said markers.

Preferably, said process comprises reproducing said text file in text-to-speech mode using said selected/synthesized voices.

In accordance with a fourth aspect, the invention has for its object a system for reproducing a text file in text-to-speech mode.

Preferably, said system comprises at least one processor configured to perform the process in accordance with the aforementioned third aspect.

In one or more of the aforementioned aspects, the invention can comprise one or more of the following preferred characteristics.

Preferably, said characteristics of the subject who pronounces said second portion comprise one or more of: identity, gender, age, nationality.

Preferably, how said second portion is to be pronounced comprises one or more of: speed, emotion/sentiment, volume.

Preferably, said method comprises training said neural network.

Preferably, said training includes providing as input, to said not yet trained neural network, a first training dataset.

Preferably, said first training dataset comprises a plurality of initial text files. Preferably, said initial text files contain portions of indirect speech.

Preferably, said initial text files contain portions of direct speech.

Preferably, said training includes, for each of said initial text files, generating an elaborated text file.

Preferably, said elaborated text file is generated by labeling at least the portions of direct speech.

Preferably, said elaborated text file is generated by associating to each of said portions of direct speech characteristics of the subject who pronounces said portion of direct speech. Preferably, said elaborated text file is generated by associating to each of said portions of direct speech and/or how said portion of direct speech is to be pronounced.

Preferably, said training includes providing as input to said not yet trained neural network said elaborated text files.

Preferably, each of said elaborated text files is provided as input to said not yet trained neural network in association with the respective initial text file.

Preferably, said training comprises providing as input to said at least partially trained neural network, a second training dataset.

Preferably, said second training dataset is formed by a multiplicity of text files.

Preferably, said text files comprise portions of indirect speech. Preferably, said text files comprise portions of direct speech.

Preferably, said training comprises obtaining, from said neural network, a multiplicity of training outputs.

Preferably, in said training outputs, markers are added to the text files of the second training dataset, which define the characteristics of the subjects who, in the text files of the second training dataset, pronounce the portions of direct speech.

Preferably, in said training outputs, markers are added to the text files of the second training dataset, which define how said portions of direct speech are to be pronounced. Preferably, said training comprises performing a correction of said markers, obtaining corrected training outputs.

Preferably, said correction is performed manually.

Preferably, said training comprises providing as input to said neural network said corrected training outputs in association with the respective training outputs.

Preferably, one or more voices to be associated with one or more second portions are selected from a library of pre-recorded voices.

Preferably, said process comprises, in the case of a known identity of the subject who pronounces a determined second portion, automatically performing an internet search for information about said subject.

Preferably, said process comprises, in the case of a known identity of the subject who pronounces a determined second portion, automatically performing an internet search for voice samples of said subject.

Preferably, said process comprises determining the voice to be associated with said determined second portion as a function of the result of said search.

### Brief description of the figures

Further characteristics and advantages will become more apparent from the detailed description of a preferred and non-exclusive embodiment of the invention. This description is provided hereinafter with reference to the accompanying figures, also having a purely exemplary and therefore non-limiting purpose, in which:
- figures 1 and 2 schematically show aspects of the present invention;
- figures 3 and 4 schematically show training phases that may be provided for in the present invention;
- figures 5-8 schematically represent the structure of files used in the present invention.

### Detailed description of embodiments of the invention

The method according to the present invention first provides for the preparation of a TXT text file.

This text file is advantageously a text that can be read/interpreted by an electronic device. Therefore, in the event that it is necessary to start from an image file containing unrecognizable text (e.g., a PDF file obtained by scanning), an Optical Character Recognition, OCR, operation is provided for, so as to make the text usable by a text-to-speech tool.

For example, the TXT text file can be in HTML format.

However, it is provided that other formats can be used, provided they are compatible with the technology described and claimed herein.

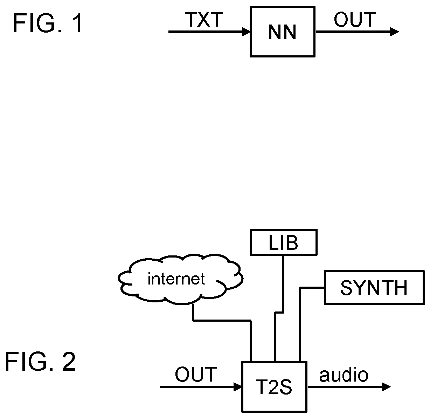

The TXT text file is provided as input to a neural network NN (figure 1).

Advantageously, the neural network NN is suitably trained, so as to provide the outputs described below. A more detailed description of an exemplary training method for the neural network NN will be provided later.

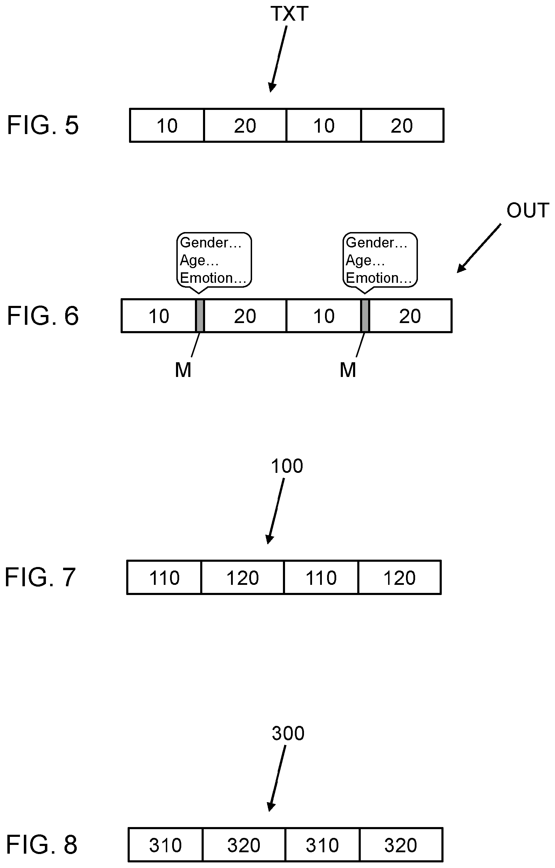

The neural network NN first identifies, within the TXT text file, first portions 10 and second portions 20 (figure 5).

The first portions 10 are constituted by indirect speech.

The second portions 20 are constituted by direct speech.

The discrimination between the first portions 10 and the second portions 20 is carried out on the basis of all those elements that allow the identification of direct speech portions, such as, for example, quotation marks (in different formats), dashes, particular formatting (e.g., in italics), introductory text (e.g., "he said:"), etc.

The neural network NN then proceeds to determine, at least for the second portions 20 (i.e., for the parts of direct speech contained in the TXT text file), the characteristics of the subject who pronounces these portions and/or how these portions are to be pronounced.

Regarding the characteristics of the subject who pronounces these portions, they may include one or more of: identity, gender, age, nationality.

The particular case of identity applies, for example, to public figures, such as actors, singers, politicians, athletes, etc., generally known to the public, who can be identified thanks to the content of the TXT text file.

Conversely, in the case of unknown subjects, or fictional subjects (it should be noted that the present invention can be applied both to texts describing real situations, such as newspaper articles, news, etc., and to fictional texts, such as short stories, novels, etc.), the invention will be mainly based on other characteristics (as mentioned, gender, age, nationality, etc.) of the subject.

The characteristics of the subject and/or the way in which the direct speech is to be pronounced are obtained based on the content of the second portion 20 and/or based on the context of the second portion 20 in the TXT text file.

In other words, as a function of what is said within the direct speech in question and/or as a function of what is recounted within the TXT text file (typically in phrases/paragraphs close to the second portion 20), the neural network NN is able to determine exactly who pronounces the second portion 20 (in the case of public figures) or at least one of gender, age, nationality, etc., of who pronounces said second portion 20. In addition or alternatively, based on the content of the second portion 20 and/or the content of the TXT text file (in particular that part of the TXT text file that is correlated to the second portion 20 and thus defines its context), it determines how said second portion 20 should be pronounced, for example if it should be pronounced quickly/slowly, with a certain emotion or a certain feeling (anger, happiness, surprise, etc.), and/or with a certain volume (e.g., shouting, whispering, etc.).

As a function of the analysis performed, the neural network NN generates one or more markers M, associated with the second portion 20.

These one or more markers M are associated with the second portion 20 and define the characteristics of the subject who pronounces said second portion 20 and/or how the second portion 20 is to be pronounced.

For example, a marker M can be generated for each of the second portions 20, as schematically shown in figure 6.

The neural network NN then proceeds to compose an output file OUT, schematically shown in figure 6, formed by the TXT text file (i.e., by the first portions 10 and the second portions 20) and by the markers M, generated as described above.

In other words, the output file OUT comprises:
- one or more first portions 10 of text, constituted by indirect speech;
- one or more second portions 20 of text, constituted by direct speech;
- one or more markers M, which define the characteristics of the subject who pronounces the said one or more second portions 20 and/or which define how the said one or more second portions 20 are to be pronounced.

It should be noted that the said one or more first portions 10 and one or more second portions 20 form the TXT text file from which one started to obtain the output file OUT.

The output file OUT can then be provided as input to a software with text-to-speech functionality (schematized in figure 2), so as to generate an audio in which the voices that pronounce the direct speech portions are determined based on the markers M.

More particularly, once the output file OUT has been created by the neural network NN from the TXT text file, as a function of the markers M, the voice to be associated with each second portion 20 is selected or synthesized, and these voices are used for the audio reproduction of the output file OUT.

As schematically shown in figure 2, the voice for each second portion 20 can be synthesized ("SYNTH" block) or selected from a library LIB of pre-recorded voices. In addition or alternatively, in the case of a known identity of the subject who pronounces a determined second portion 20, an automatic internet search is performed to retrieve information on said subject and/or voice samples of said subject; in this way, the voice to be associated with the determined second portion 20 can be defined. As an example, consider a TXT text file consisting of a newspaper article that reports, in the form of direct speech, the declarations of a very well-known sportsperson; the neural network NN, in correspondence with the relative portions of direct speech, will add to the output file OUT respective markers M in which it specifies the name, surname, gender and age of the sportsperson; when the final audio file has to be generated, it is provided that the voice of this sportsperson is retrieved on the internet (drawing, for example, from interviews or other contributions in which the voice of the subject in question is available), or a generic voice is chosen but with characteristics of similarity with the gender and age of the sportsperson, and adapted to the specific text contained in the output file TXT.

As mentioned above, in some embodiments of the invention, it is provided that a training operation of the neural network NN is performed, to enable it to generate the output file OUT.

For this purpose, one preferably starts with a not yet trained neural network NN, to which a first training dataset is provided as input.

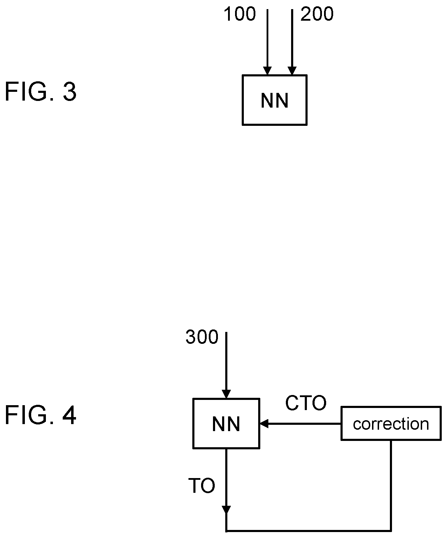

The first training dataset comprises a plurality of initial text files 100 (figure 3); each initial text file 100 contains portions of indirect speech 110 and portions of direct speech 120 (figure 7).

For each of these initial text files 100, an elaborated text file 200 is generated, preferably manually.

Each elaborated text file 200 is created by labeling at least the direct speech portions 120 and by associating to each of the direct speech portions 120 the characteristics of the subject who pronounces said direct speech portion 120 and/or how said direct speech portion 120 is to be pronounced.

In summary, the labels that are added to each initial text file 100, to obtain the corresponding elaborated text file 200, represent the markers that the neural network NN must learn to add to the text files it receives as input.

Each elaborated text file 200 is then provided as input to the not yet trained neural network NN, in association with the respective initial text file 100.

In this way, the neural network NN learns that, upon receiving a text file, the expected output consists of the same text file, to which the labels (or markers) described above are added.

In addition to the training operations described so far, it is provided that the following phases can be performed.

To the at least partially trained neural network NN, a second training dataset is provided as input.

The second training dataset is formed by a multiplicity of text files 300 (figure 4); each text file of the second training dataset comprises portions of indirect speech 310 and portions of direct speech 320 (figure 8).

The at least partially trained neural network NN provides as output a multiplicity of training outputs TO; in each training output TO, markers are added to the respective text file 300 of the second training dataset. These markers should define the characteristics of the subjects who, in the text files 300 of the second training dataset, pronounce the portions of direct speech 320 and/or how said portions of direct speech 320 are to be pronounced.

If the neural network NN were already fully trained, and therefore operated optimally, the markers inserted in the text files 300 to obtain the training outputs TO would be correct and fully satisfactory.

If, however, as hypothesized, the training of the neural network NN is not yet complete, these markers will be partially absent or inaccurate.

A correction of these markers is then performed, preferably manually, obtaining corrected training outputs CTO.

Each corrected training output CTO is provided as input to the neural network NN, in association with the respective training output TO, so as to allow the neural network NN to detect the difference between the generated output and the correct output and progressively improve the learning related to the generation of markers.

In light of the above, the Applicant observes that the invention as described and claimed achieves the objective of ensuring that, during the execution of a text-to-speech operation, the portions of text corresponding to direct speech are read by voices different from the portions of text corresponding to indirect speech (the latter being typically those related to the so-called "narrator's voice"), and the voices used for the direct speech portions are selected based on the content and/or context of the direct speech.

## Claims

1. Method for composing a file to be reproduced in text-to-speech mode, comprising performing, by means of a trained neural network (NN), the following operations: receiving as input a text file (TXT); identifying first portions (10) of indirect speech within said text file (TXT); identifying second portions (20) of direct speech within said text file (TXT); for at least one of said second portions (20), determining, based on the content of said second portion (20) and/or based on the context of said second portion (20) in the text file (TXT), characteristics of the subject who pronounces said second portion (20) and/or how said second portion (20) is to be pronounced; generating one or more markers (M), associated with said second portion (20), wherein said one or more markers (M) define the characteristics of the subject who pronounces said second portion (20) and/or how said second portion (20) is to be pronounced; composing an output file (OUT), formed by said text file (TXT) and said markers (M).

2. Method according to claim 1, wherein said characteristics of the subject who pronounces said second portion (20) comprise one or more of: identity, gender, age, nationality.

3. Method according to claim 1 or 2, wherein how said second portion (20) is to be pronounced comprises one or more of speed, emotion/sentiment, volume.

4. Method according to any one of the preceding claims, comprising a training of said neural network, which includes the following operations: providing as input, to said not yet trained neural network (NN), a first training dataset, comprising a plurality of initial text files (100), containing portions of indirect speech (110) and portions of direct speech (120); for each of said initial text files (100), generating an elaborated text file (200), by labeling at least the portions of direct speech (120) and associating to each of said portions of direct speech (120) characteristics of the subject who pronounces said portion of direct speech (120) and/or how said portion of direct speech (120) is to be pronounced; providing as input to said not yet trained neural network (NN) said elaborated text files (200), each in association with the respective initial text file (100).

5. Method according to claim 4, wherein the training of said neural network (NN) further comprises: providing as input to said at least partially trained neural network (NN), a second training dataset, formed by a multiplicity of text files (300) comprising portions of indirect speech (310) and portions of direct speech (320); obtaining, from said neural network (NN), a multiplicity of training outputs (TO), wherein markers are added to the text files (300) of the second training dataset, which define the characteristics of the subjects who, in the text files (300) of the second training dataset, pronounce the portions of direct speech (320) and/or how said portions of direct speech (320) are to be pronounced; manually performing a correction of said markers, obtaining corrected training outputs (CTO); providing as input to said neural network (NN) said corrected training outputs (CTO) in association with the respective training outputs (TO).

6. Process for reproducing a text file in text-to-speech mode, comprising: receiving an output file (OUT), comprising:
one or more first portions (10) of text, formed by indirect speech;
one or more second portions (20) of text, formed by direct speech;
one or more markers (M), which define the characteristics of the subject who pronounces the said one or more second portions (20) and/or which define how the said one or more second portions (20) are to be pronounced; selecting or synthesizing, on the basis of said markers (M), one or more voices to be associated with the second portions; reproducing said text file (TXT) in text-to-speech mode using said selected/synthesized voices.

7. Process according to claim 6, wherein one or more voices to be associated with one or more second portions are selected from a library (LIB) of pre-recorded voices.

8. Process according to claim 6 or 7, comprising: in the case of a known identity of the subject who pronounces a determined second portion (20), automatically performing an internet search for information on said subject and/or voice samples of said subject; determining the voice to be associated with said determined second portion (20) as a function of the result of said search.

9. Process according to any one of claims 6-8, wherein said output file (OUT) is generated by the method according to any one of claims 1-5.

10. Device for composing a file to be reproduced in text-to-speech mode, comprising at least one processor equipped with a trained neural network (NN) and configured to perform any of the operations of claims 1-5.

11. System for reproducing a text file in text-to-speech mode, comprising at least one processor configured to perform the operations of any one of claims 6-9.
